(19) Europäisches Patentamt
European Patent Office
Office européen des brevets

(11) **EP 1 690 110 B1**

(12) **EUROPÄISCHE PATENTSCHRIFT**

(45) Veröffentlichungstag und Bekanntmachung des Hinweises auf die Patenterteilung:
**11.11.2009   Patentblatt 2009/46**

(21) Anmeldenummer: **04819625.7**

(22) Anmeldetag: **27.11.2004**

(51) Int Cl.:
**G01S 15/42** (2006.01)

(86) Internationale Anmeldenummer:
**PCT/EP2004/013476**

(87) Internationale Veröffentlichungsnummer:
**WO 2005/054897 (16.06.2005 Gazette 2005/24)**

(54) **VERFAHREN ZUM AUSSENDEN UND EMPFANGEN VON WELLENENERGIE**

METHOD FOR EMITTING AND RECEIVING WAVE ENERGY

PROCEDE POUR EMETTRE ET RECEVOIR DE L'ENERGIE ONDULATOIRE

(84) Benannte Vertragsstaaten:
**AT BE BG CH CY CZ DE DK EE ES FI FR GB GR HU IE IS IT LI LU MC NL PL PT RO SE SI SK TR**

(30) Priorität: **04.12.2003   DE 10356577**

(43) Veröffentlichungstag der Anmeldung:
**16.08.2006   Patentblatt 2006/33**

(73) Patentinhaber: **ATLAS ELEKTRONIK GMBH**
**28305 Bremen (DE)**

(72) Erfinder: **NEUMEISTER, Dirk**
**28309 Bremen (DE)**

(74) Vertreter: **Wasiljeff, Johannes M.B.**
**Jabbusch Siekmann & Wasiljeff**
**Patentanwälte**
**Otto-Lilienthal-Strasse 25**
**28199 Bremen (DE)**

(56) Entgegenhaltungen:
**EP-A- 0 631 153     EP-A- 0 963 064**
**US-A- 5 680 462     US-B1- 6 331 974**

**Beschreibung**

Die Erfindung betrifft ein Verfahren zum Aussenden und Empfangen von Wellenenergie der im Oberbegriff des Anspruchs 1 definierten Gattung.

Ein solches Verfahren dient zur Ortung von Zielen, also zur Lagebestimmung von Zielen in einem Überwachungsgebiet oder zum Übermitteln von Kennsignalen zur Freund/Feind-Erkennung, bei welcher Kennsignale mit vorgebbarer Codierung abgestrahlt werden, deren Codierung nur Berechtigten bekannt ist.

Bei einem bekannten Verfahren zur Freund/Feind-Erkennung (US 3 733 552) wird auf einem Übertragungskanal ständig Rauschen gesendet, das von Unberechtigten für thermisches Rauschen gehalten werden kann. Im Spektrum dieses Rauschen werden miteinander korrelierbare Teilspektren zur Nachrichtenübertragung eingepasst, indem Teilspektren ausgespart werden und aus diesen Teilspektren durch Frequenzverschiebung miteinander korrelierbare Teilspektren in die entstandenen Lücken eingesetzt werden. Damit ist gewährleistet, dass die Nachricht in Rauschen gut getarnt übertragen wird. Allerdings ist die Schwierigkeit zur Detektion für einen Unberechtigten nur dann sehr groß, wenn die Bandbreite des Übertragungskanäls sehr groß ist, da nur dann gewährleistet ist, dass der Unberechtigte nicht innerhalb einer ihm zur Verfügung stehenden Zeit die notwendige Signalverarbeitung zur Detektion durchführen kann. Darüber hinaus besteht der weitere Nachteil, dass bei Übertragung einer Nachricht von Schiff zu Schiff durch das Wasser infolge Relativbewegung zwischen Sender und Empfänger unbekannte Dopplerverschiebungen auftreten, die empfangsseitig einen erheblichen Aufwand zum Erkennen und Decodieren des Kennsignals erfordern, um eine eindeutige Aussage über den Grad der Übereinstimmung des Empfangssignals mit dem Sendesignal zu erzielen.

Bei einem bekannten Verfahren zur Ortung von Zielen (EP 0 631 153 B1) mittels eines Radarsystems wird von einem Radarsender ein Radarsignal von chaotischer Struktur abgestrahlt, das nach Reflexion an einem Zielobjekt von einem Radarempfänger empfangen und ausgewertet wird. Zur Generierung des Radarsignals wird einem gepulsten Trägersignal ein Chaoscode durch Phasenmodulation aufgeprägt. Der Code hat keine feste, sondern eine willkürlich gewählte Sequenzlänge. Dadurch kann die individuelle Pulsbreite der Sendepulse sehr schmal gemacht werden, um eine gute Entfernungsauflösung zu erhalten und gleichzeitig die Pulszahl in jeder Sequenz sehr groß gemacht werden, um eine maximale Reichweite zu erreichen, die nicht durch die Codierung begrenzt ist. Im Radarempfänger, der für Zwecke der Ortung von Zielen am Ort des Radarsenders selbst platziert ist, wird das Empfangssignal in eine Zwischenfrequenz umgeformt, und durch Demodulation des Zwischenfrequenzsignals wird ein Basisband-Radarsignal erhalten. Das Basisband-Radarsignal und der Chaoscode werden einem Korrelator zugeführt, der die Zeitverschiebung bestimmt, die erforderlich ist, dass ein akzeptables Maß an Korrelation zwischen dem Basisband-Radarsignal und dem Chaoscode erreicht wird. Aus der Zeitverschiebung wird der Abstand des Zielobjekts vom Radarsystem abgeleitet. Die Codierung ist widerstandsfähig gegenüber Störungen und einer Analyse durch solche Empfänger, die nicht über die Codierungs-Sequenz verfügen. Auch wenn der unberechtigte Empfänger das solchermaßen codierte Sendesignal nicht zu entschlüsseln vermag, so kann er dieses dennoch detektieren und aus der Tatsache des Signalempfangs auf aktiv ortende Gegner in der Umgebung schließen und entsprechende Gegenmaßnahmen einleiten.

Der Erfindung liegt die Aufgabe zugrunde, ein Verfahren der eingangs genannten Art anzugeben, bei dem die von der Sendeantenne abgestrahlten Sendesignale im Hintergrundrauschen versteckt sind und nur von berechtigen Empfängern detektiert werden können.

Die Aufgabe wird erfindungsgemäß durch die Merkmale im Anspruch 1 gelöst.

Das erfindungsgemäße Verfahren hat den Vorteil, dass die abgestrahlten Signale sich durch eine große Bandbreite ohne charakteristische Linien im Spektrum auszeichnen, so dass der Höreindruck rauschartig ist und die gesendeten Signale im Umgebungsgeräusch (Ambient-Noise) des Hintergrunds gut getarnt sind. Zugleich ist ihre Energie über einen breiten Frequenzbereich verteilt, so dass mittels schmalbandiger Fourier-Transformation keine Steigerung der Detektionsleistung erreicht werden kann. Die Detektion der erfindungsgemäß erzeugten Sendesignale ist nur mittels einer chaostheoretischen Strukturanalyse möglich, mit welcher die deterministische Struktur der Sendesignale, die im zeitlichen Verlauf der Sendesignal selbst nicht erkennbar ist, herausgeschält werden kann. Durch Vergleich des durch diese Analyse gewonnenen Strukturmaßes des an der Empfangsantenne abgenommenen elektrischen Empfangssignals mit dem Strukturmaß des elektrischen Sendesignals lässt sich zuverlässig das Sendesignal im empfangsseitigen Ausgangssignal erkennen.

Mit dem erfindungsgemäßen Verfahren können sowohl Ziele durch eine sog. Aktivortung detektiert und deren Position bestimmt werden, als auch eine Kommunikation zwischen Sender und Empfänger durchgeführt werden, die z.B. für die sog. Freund/Feind-Erkennung eingesetzt werden kann. In beiden Fällen ist aufgrund der Tarnung der Sendesignale im Umgebungsgeräusch die Eigenverratswahrscheinlichkeit des Sendenden sehr gering, da weder das mit den Sendesignalen geortete Ziel noch das Sendegebiet überwachende Dritte das Abstrahlen der Sendesignale feststellen können.

Das erfindungsgemäße Verfahren wird bevorzugt in der Wasserschalltechnik oder Unterwasserakustik eingesetzt, kann aber auch im Medium Luft, z.B. zur Radarortung von Zielen oder zur Freund/Feind-Erkennung bei der Luftzielbekämpfung, angewendet werden.

Zweckmäßige Ausführungsformen des erfindungsgemäßen Verfahrens mit vorteilhaften Weiterbildungen und Ausgestaltungen der Erfindung ergeben sich aus den weiteren Ansprüchen.

Gemäß einer vorteilhaften Ausführungsform der Erfindung wird der zeitliche Verlauf des elektrischen Signals aus dem chaotisch-deterministischen Schwingungsverhalten eines. Modells abgeleitet, dessen Schwingungsverhalten mittels mindestens eines Parameters variierbar ist. Ein Beispiel für ein solches Modell ist ein als Pohl-Pendel bekanntes Rotationspendel mit Unwucht, dessen Schwingungsverhalten durch eine Differentialgleichung beschrieben werden kann. Die variablen Parameter sind die Federkonstante einer Rückstellfeder, die Amplitude und Frequenz einer äußeren Anregung, die Dämpfungskonstante einer Schleifreibung, die Masse und der Hebelarm der Unwucht und die Dämpfungskonstante einer Wirbelstrombremse. Die Lösung dieser Differentialgleichung ist eine chaotisch-deterministische Zeitreihe, die den zeitlichen Verlauf des elektrischen Signals vorgibt. Mindestens eine der variablen Parameter der Differentialgleichung wird als Kontrollparameter zur iterativen Variation der Differentialgleichung herangezogen. Im Beispiel des Pohlschen Pendels kann beispielsweise der Strom durch die Wirbelstrombremse als Kontrollparameter verwendet werden.

Um die Struktur des generierten elektrischen Signals, die im zeitlichen Verlauf selbst nicht zu erkennen ist, mit einem Strukturmaß charakterisieren zu können, das empfangsseitig zur Detektion des Sendesignals erforderlich ist, wird gemäß einer vorteilhaften Ausführungsform der Erfindung eine Eigenschaft des Signals, nämlich die Maßzahl der Struktur seiner Abbildung in einen mindestens zweidimensionalen Raum, vorgegeben und der mindestens eine variable Kontrollparameter solange iterativ verändert, bis die gewünschte Maßzahl erreicht ist. Diese Maßzahl ist charakteristisch für das elektrische Signal, das über die Sendeantenne abgestrahlt wird, und wird empfangsseitig zur Detektion des abgestrahlten Signals im Empfangssignal herangezogen.

Gemäß einer bevorzugten Ausführungsform der Erfindung wird als Maßzahl die fraktale Dimension der zweidimensionalen Abbildung des elektrischen Signals berechnet.

Die Erfindung ist anhand eines in der Zeichnung illustrierten Ausführungsbeispiels eines Verfahrens zur aktiven Ortung eines Ziels im folgenden näher beschrieben. Es zeigen:

Fig. 1      ein Blockschaltbild zur Illustrierung des sendeseitigen Teils des Verfahrens,

Fig. 2      ein Blockschaltbild zur Illustrierung des empfangsseitigen Teils des Verfahrens,

Fig. 3      einen Winkelverlauf $\alpha(t)$ einer chaotisch-deterministischen Schwingung eines Modells zur Erzeugung des zeitlichen Verlaufs eines elektrischen Signals mit deterministischchaotischer Struktur,

Fig. 4      ein Diagramm zur Erläuterung des Funktionsblocks Rückabbildung im Blockschaltbild der Fig. 1 und 2,

Fig. 5 und 6      jeweils zwei Diagramme zur Erläuterung des Funktionsblocks "fraktale Dimension" in Fig. 1 und 2.

Bei dem nachfolgend beschriebenen Verfahren zur aktiven Ortung von im Wasser sich befindlichen Zielen, mit dem sowohl die Ziele aufgefasst, d.h. detektiert, als auch die Position (Entfernung und Peilwinkel) der einzelnen Ziele bestimmt werden kann, wird sendeseitig Schallenergie in das Medium Wasser abgestrahlt und empfangsseitig aus dem Medium zurückgestreute Wellenenergie empfangen. Hierzu wird sendeseitig eine Sendeantenne 11, die die Schallenergie in einen breiten Raumsektor oder rundum abstrahlt, und empfangsseitig eine Empfangsantenne mit Richtcharakteristik verwendet, mittels der das Maximum der empfangenen Wellenenergie und dessen Einfallsrichtung bestimmt wird. Hierzu wird sendeseitig der Sendeantenne 11 ein breitbandiges, elektrisches Signal zugeführt und empfangsseitig in dem an der Empfangsantenne 12 abgenommenen Empfangssignal das sendeseitig abgestrahlte Signal detektiert. Die Zeit zwischen dem Aussenden des Sendesignals durch die Sendeantenne 11 und dem Empfang des abgestrahlten Signals durch die Empfangsantenne 12 wird gemessen, und mit der gemessenen Zeit wird die Entfernung zwischen der Sendeantenne 11 und dem Ziel berechnet.

Damit die Ortung des Ziels durch das mit einer bestimmten Zeitdauer ein- oder mehrmals abgestrahlte Sendesignal vom Ziel selbst nicht bemerkt wird, wird das Sendesignal durch eine entsprechende Ausbildung des die Sendeantenne 11 speisenden elektrischen Signals im Umgebungsrauschen des Ziels versteckt. Empfangsseitig kann dagegen das am Ziel reflektierte Sendesignal im Empfangssignal der Empfangsantenne 12 aus dem Umgebungsgeräusch der Empfangsantenne 12 eliminiert werden.

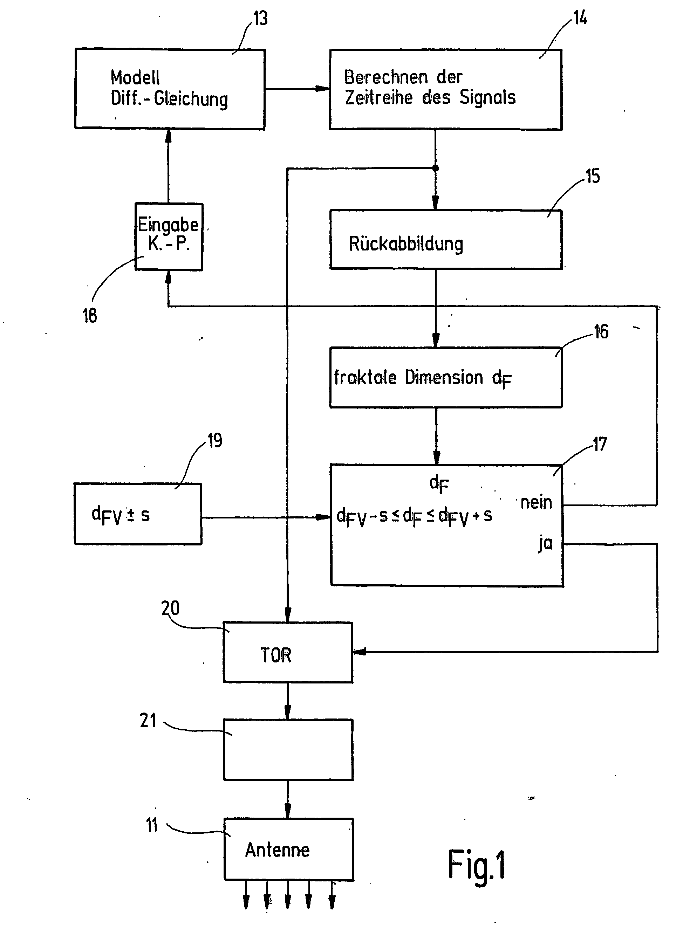

Hierzu wird prinzipiell das elektrische Signal zur Speisung der Sendeantenne 11 mit einem zeitlichen Verlauf generiert, der eine deterministisch-chaotische Struktur aufweist, und zur empfangsseitigen Detektion ein Strukturmaß verwendet, das die deterministisch-chaotische Struktur des elektrischen Signals charakterisiert. Wie in dem Blockschaltbild der Fig. 1 im einzelnen dargestellt ist, wird zunächst der zeitliche Verlauf des elektrischen Signals aus dem chaotisch-deterministischen Schwingungsverhalten eines Modells abgeleitet, dessen Schwingungsverhalten mittels eines ausgewählten Parameters, im folgenden Kontrollparameter genannt, variierbar ist. Beispielsweise wird im ersten Verfahrensschritt 13 "Modell Differentialgleichung" als Modell die Differentialgleichung eines Rotationspendels mit Unwucht, eines sog. Pohlschen Pendels, verwendet, dessen variable Parameter die Federkonstante einer Rückstellfeder, die Amplitude und Frequenz einer äußeren Anregung, die Dämpfungskonstante einer Schleifreibung, die Masse und der Hebelarm der Unwucht und die Dämpfungskonstante einer Wirbelstrombremse sind.

Die vollständige Differentialgleichung eines solchen Pohlschen Pendels lautet:

$$\Theta \cdot a_\alpha = D \cdot \left[\alpha - \alpha_e \cdot \sin \omega_e t\right] + m \cdot g \cdot r_o \sin \alpha - k_{d1} \frac{v_\alpha}{|v_\alpha|} - k_{d2} \cdot v_\alpha \cdot I^2$$

wobei das Rückstellmoment

$$M_{R\ddot{u}ck} = D\left[\alpha - \alpha_e \cdot \sin \omega_e t\right],$$

das Unwuchtmoment

$$M_m = m \cdot g \cdot r_o \sin \alpha,$$

das Moment der Schleifreibung

$$M_{schleif} = -k_{d1} \frac{v_\alpha}{|v_\alpha|}$$

und
das Moment der Wirbelstrombremse

$$M_{wirbel} = -k_{d2} v_\alpha \cdot I^2$$

ist.

Darin bedeuten:

$\alpha$ = momentane Winkelvariable
$v_\alpha$ = Winkelgeschwindigkeit
$a_\alpha$ = Winkelbeschleunigung
$t$ = Zeit
$D$ = Federkonstante der Rückstellfeder
$m$ = Unwuchtmasse
$r_o$ = Abstand der Unwucht von der Drehachse
$g$ = Erdbeschleunigung
$\Theta$ = Gesamtträgheitsmoment
$\alpha_e$ = Amplitude der Anregung
$\omega_e$ = Kreisfrequenz der Anregung
$k_{d1}$ = Dämpfungskonstante der konst. Schleifreibung
$k_{d2}$ = Dämpfungskonstante der Wirbelstromdämpfung
$I$ = Strom durch die wirbelstromerzeugende Spule.

Werden alle Parameter fest vorgegeben und wird lediglich ein Parameter, hier der Strom I durch die wirbelstromerzeugende Spule, als veränderbarer Kontrollparameter belassen, so ergibt sich eine Funktion

$$\alpha = f(t, I),$$

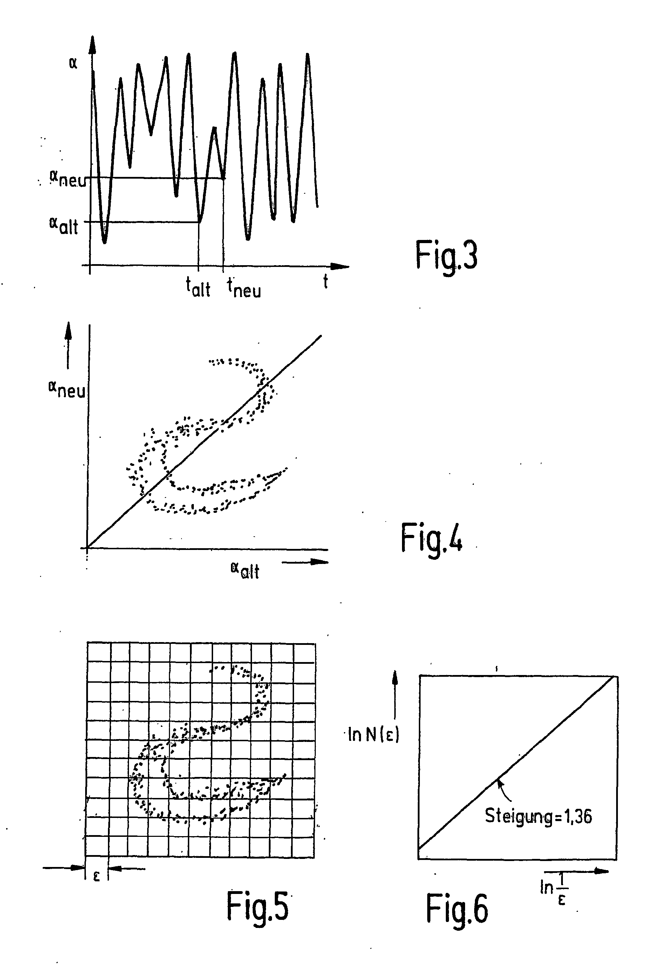

die zur Nachbildung des Zeitverlaufs des elektrischen Signals verwendet wird, wobei $\alpha$ die Signalamplitude darstellt. Die Lösung dieser Differentialgleichung mit fest vorgegebenen Parametern und dem angenommenen Eingabe- oder Kontrollparameter I führt zu einer Zeitreihe des Signals, die aus der Differentialgleichung mit dem Verfahrensschritt 14 "Berechnen der Zeitreihe des Signals" erstellt wird. In Fig. 3 ist schematisch die chaotische Schwingung des Pohlschen Pendels für einen Zeitabschnitt dargestellt. Das nachgebildete elektrische Signal hat den gleichen zeitlichen Verlauf, wobei $\alpha$ die momentane Amplitudenvariable des Signals ist.

Die Zeitreihe des elektrischen Signals wird in einen mehrdimensionalen Raum abgebildet, in der dessen deterministische Struktur erkennbar ist, und eine Maßzahl der Struktur der Abbildung bestimmt. Im Ausführungsbeispiel wird im Verfahrensschritt 15 eine Abbildung der Zeitreihe in einen zweidimensionalen Phasenraum durch eine sog. Rückabbildung (Return-Map) vorgenommen. Wie in Fig. 3 dargestellt ist, werden hierzu als die ausgewählte Eigenschaft des elektrischen Signals die unteren Scheitelpunkte verwendet. Wahlweise können jedoch auch die oberen Scheitelpunkte oder die zeitlichen Abstände der Scheitelpunkte oder in gleichen Zeitintervallen auftretende Momentanwerte des elektrischen Signals herangezogen werden. Auch ist es möglich, als ausgewählte Eigenschaft die zeitlichen Abschnitte der Durchstoßpunkte eines Poincaré-Schnitts zu verwenden. Zum Poincare-Schnitt wird verwiesen auf Crighton Dowling "Modern Methodes in Analytical Acoustics", Springer-Verlag London Ltd., 1992, Seite 698 ff.. Das Ergebnis der so durchgeführten Rückabbildung des elektrischen Signals in den zweidimensionalen Phasenraum ist im Diagramm der Fig. 4 illustriert. Die Rückabbildung erfolgt in der Weise, dass auf der Ordinate eines zweidimensionalen Koordinatensystems die unteren Scheitelwerte $\alpha_{neu}$ des elektrischen Signals und auf der Abszisse dessen Vorwerte $\alpha_{alt}$ aufgetragen werden. Deutlich ist zu sehen, dass durch die Rückabbildung eine wesentliche Datenreduktion erfolgt ist. Die Abbildung im zweidimensionalen Raum lässt eine Struktur erkennen. Diese Struktur, die hier nur aus Gründen der vereinfachten Darstellung direkt von der chaotischen Schwingung des Pohlschen Pendels gemäß Fig. 3 abgeleitet ist, gibt auch die aus der Zeitreihe durch Rückabbildung gewonnene Struktur des elektrischen Signals mit der Amplitudenvariablen $\alpha$ wieder.

Um diese deterministisch-chaotische Struktur des Signals charakterisieren zu können, wird eine Maßzahl für die Struktur der Abbildung berechnet. Im Ausführungsbeispiel ist als Maßzahl für die Struktur die sog. fraktale Dimension $d_F$ gewählt. Zum Begriff und zur Berechnung der fraktalen Dimension wird verwiesen auf Edward Ott, "Chaos in Dynamical Systems", Cambridge University Press 1993, Seite 69 ff. oder Dr. Roman Worg "Deterministisches Chaos", Bibliographisches Institut & F.A. Brockhaus AG, 1993, Seite 125 ff. Berechnungsverfahren für die fraktale Dimension $d_F$ sind beispielsweise das Gitterverfahren (GV), das Abstandsanalyse-Verfahren (AV) und das Vergrößerungs-Vermehrungsverfahren (VV). Im Ausführungsbeispiel der Fig. 1 wird zur Berechnung der fraktalen Dimension $d_F$ im Verfahrensschritt 16 das Gitterverfahren (GV) verwendet. Bei diesem Gitterverfahren bedient man sich einer systematischen Gitterüberdeckung der Abbildung im zweidimensionalen Raum durch Quadrate mit der Seitenlänge $\varepsilon$. Dabei wird zunehmend die Seitenlänge $\varepsilon$ verkleinert und jeweils die Anzahl N der Quadrate bestimmt, die von der Abbildung getroffen werden. Eine solche Gitterüberdeckung der Abbildung ist in Fig. 5 dargestellt. Wird $\varepsilon$, ausgehend von einem relativ großen Wert, systematisch verkleinert, so ergibt sich zwischen der Anzahl N der getroffenen Quadrate und der Seitenlänge $\varepsilon$ ein Zusammenhang $N(\varepsilon)$. Trägt man $N(\varepsilon)$ über $1/\varepsilon$ doppeltlogarithmisch auf, so ergibt sich eine Gerade, deren Steigung eine Näherung für die fraktale Dimension $d_F$ ist.

In Fig. 6 ist eine solche Gerade dargestellt, die beispielhaft die Steigung von 1,36 aufweist. Da eine Rückabbildung eines stochastischen Signals ohne jegliche deterministische Struktur eine fraktale Dimension $d_F = 2$ ergibt, ist eine Steigung kleiner 2 ein Indiz für eine deterministische Struktur im Zeitverlauf des Signals. Die Größe der Steigerung, also die fraktale Dimension $d_{F1}$ ist eine Maßzahl für diese Struktur.

Um in dem Zeitverlauf des elektrischen Signals eine gewünschte deterministische Struktur zu erhalten, die zur Detektion des Signals in dem über die Empfangsantenne empfangenen Umgebungsgeräusche erforderlich ist, wird in Block 19 ein Wert der fraktalen Dimension $d_F$ als Vorgabemaßzahl $d_{FV}$ mit einem zugelassenen Toleranzbereich $\pm$ s, beispielsweise $1,1 \pm 0,1$, vorgegeben. Im Verfahrensschritt 17 wird nunmehr die über die fraktale Dimension $d_F$ berechnete Maßzahl für die deterministische Struktur des generierten elektrischen Signals mit der Vorgabemäßzahl verglichen. Erbringt der Vergleich, dass die im Verfahrensschritt 16 berechnete fraktale Dimension $d_F$ als Maßzahl für die deterministische Struktur des elektrischen Signals nicht im Toleranzbereich $\pm$ s liegt, also die berechnete fraktale Dimension $d_F$ größer $d_{FV}$ + s oder kleiner $d_{FV}$ - s ist, so wird mit dem Verfahrensschritt 18 "Eingabe Kontrollparameter", der variable Parameter des Modells, im Ausführungsbeispiel der Strom I durch die wirbelstromerzeugende Spule, geändert. Die Verfahrensschritte 14 - 17 mit Generierung des elektrischen Signals durch Berechnung der Zeitreihe aus der modifizierten Differentialgleichung, die Abbildung in den zweidimensionalen Phasenraum durch Rückabbildung, die Bestimmung der Maßzahl der Struktur der Abbildung durch Berechnung der fraktalen Dimension $d_F$ werden wiederholt und die Maßzahl erneut mit der Vorgabemaßzahl verglichen. Solange beim Vergleich keine Überstimmung von Vorgabemaßzahl $d_{FV}$ und Maßzahl $d_F$ festgestellt wird, die innerhalb des Toleranzbereichs $\pm$ s liegt, werden durch erneute Änderung des Kontrollparameters im Verfahrensschritt 18 die Verfahrensschritte 14, 15 und 16 fortlaufend wiederholt, bis die Übereinstimmung erreicht ist.

Wird eine Übereinstimmung im Toleranzbereich festgestellt, so wird das zuletzt generierte elektrische Signal, also das elektrische Signal, das mit dem zur Übereinstimmung führenden Wert des mindestens einen variablen Parameters des Modells generiert worden ist, zur Speisung der Sendeantenne 11 freigegeben. Hierzu wird ein Tor 20 geöffnet und das elektrische Signal nach Filterung, Festlegung der Bandbreite und der Sendedauer sowie nach Verstärkung im Block 21 an die elektrischen Wandler der Sendeantenne 11 gelegt.

Das elektrische Signal wird als Schallsignal von der Sendeantenne 11 in das Wasser abgestrahlt, an einem im Seegebiet innerhalb der Reichweite der Sendeantenne 11 befindlichen Ziel zurückgestreut und über die am Ort der Sendeantenne 11 platzierte Empfangsantenne 12 empfangen. Durch die chaotisch-deterministische Struktur des Sendesignals, ist dieses im Umgebungsrauschen des Ziels verborgen, so dass das Ziel das Sendesignal nicht detektieren kann und so nicht Rückschlüsse auf einen im Seegebiet befindlichen Gegner, der aktiv ortet, ziehen kann. Am Ort der Empfangsantenne 12 ist das zurückgestreute Sendesignale ebenfalls im Umgebungsgeräusch der Empfangsantenne 12 verborgen, kann aber mit Hilfe der Kenntnis des Strukturmaßes, also der Maßzahl für die deterministische Struktur des gesendeten Signals, detektiert werden.

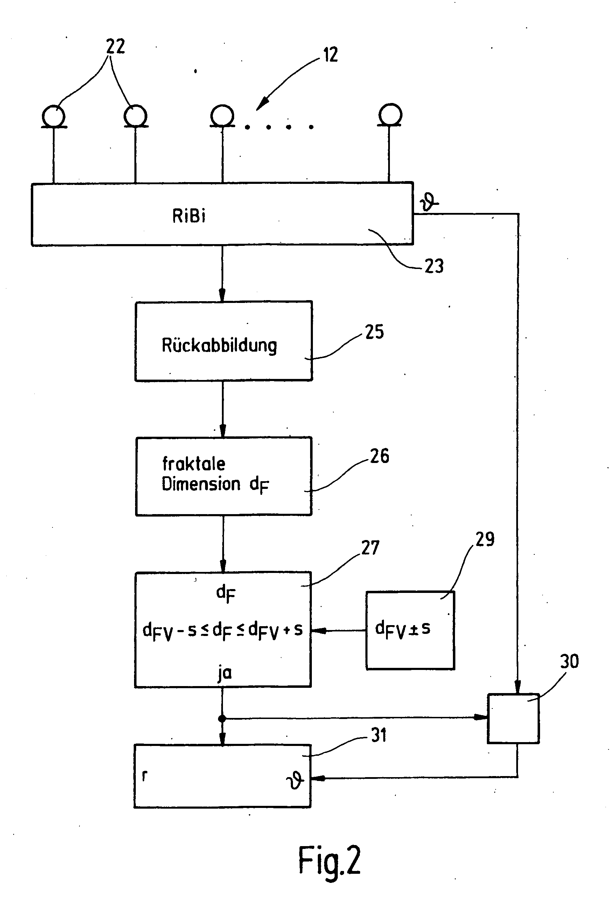

In Fig. 2 sind die auf der Empfängerseite durchgeführten Verfahrensschritte zum Empfang des gesendeten Schallsignals im Blockschaltbild dargestellt. Die am Empfangsort einfallende Schallenergie wird mit der Empfangsantenne 12 empfangen. Die im Ausführungsbeispiel als sog. Linearantenne eingesetzte Empfangsantenne 12 besitzt eine Vielzahl von äquidistant aufgereihten Hydrofonen 22. Eine solche Linearantenne ist als Schleppantenne (Towed Array) oder als eine am Bootskörper befestigte Seitenantenne (Flank Array), mitunter auch als Bordwandstreamer bezeichnet, bekannt. Alle Hydrofone 22 werden gemeinsam betrieben, und durch eine entsprechende Signalverarbeitung aller elektrischer Ausgangssignale der Hydrofone 22 in einem sog. Richtungsbildner 23 oder Beamformer wird eine Richtcharakteristik der Empfangsantenne 12 gebildet, deren Achse größter akustischer Empfindlichkeit rechtwinklig auf der Empfangsantenne 12 steht oder unter einem spitzen Winkel $-90° > \vartheta < + 90°$ zur Normalen der Empfangsantenne 12 geschwenkt sein kann. Aufbau und Wirkungsweise des Richtungsbildners 23 ist bekannt und beispielsweise in der US 4 060 792 oder der DE 21 14 373 A1 oder in der DE 100 27 538 A1 beschrieben.

Das elektrische Ausgangssignal am Ausgang des Richtungsbildners 23, im folgenden als das an der Empfangsantenne 12 abgenommene Empfangssignal bezeichnet, wird wiederum in den gleichen mehrdimensionalen Phasenraum mit dem gleichen Verfahren abgebildet wie das elektrische Signal bei der Generierung des Sendesignals. Da dort die Rückabbildung gewählt worden ist, wird auch hier die Abbildung in den zweidimensionalen Phasenraum mittels Rückabbildung durchgeführt (Verfahrensschritt 25) und als Maßzahl für die Struktur der Abbildung die fraktale Dimension $d_F$ berechnet (Verfahrensschritt 26). Im Verfahrensschritt 27 wird festgestellt, ob die Maßzahl $d_F$ mit der bekannten Vorgabemaßzahl $d_{FV}$ innerhalb des Toleranzbereiches $\pm$ s übereinstimmt. Die Vorgabemaßzahl $d_{FV}$ und der zulässige Toleranzbereich $\pm$ s sind empfangsseitig bekannt und werden über einen Eingabeblock 29 vorgegeben. Ist Übereinstimmung innerhalb des Toleranzbereichs $\pm$ s gegeben, so ist damit festgestellt, dass das von der Sendeantenne 11 abgestrahlte Sendesignal auch empfängerseitig empfangen worden ist. Nunmehr wird das Empfangssignal zur Auswertung freigegeben. Beispielsweise wird im Falle der Übereinstimmung der Maßzahl für die deterministische Struktur des Ausgangssignals mit der Vorgabemaßzahl innerhalb des Toleranzbereichs $\pm$ s ein Tor 30 geöffnet, an dem der jeweils vom Richtungsbildner 23 momentan eingestellte Schwenkwinkel $\vartheta$ der Empfangsantenne 12 anliegt. Der Schwenkwinkel $\vartheta$ wird als Peilung des Ziels in einer Anzeigeeinheit 31 dargestellt. Mittels eines hier nicht dargestellten Zeitmessers wird die Zeit von Aussenden des Sendesignals durch die Sendeantenne 11 bis zum Empfang des am Ziel reflektierten oder zurückgestreuten Sendesignals durch die Empfangsantenne 12 gemessen und daraus die Entfernung r zwischen der Ortungsanlage und dem Ziel berechnet. Die Entfernung r wird ebenfalls in der Anzeigeeinheit 31 angegeben. Mit Peilung $\vartheta$ und Entfernung r ist die Position des Ziels erfasst.

Neben der Zieldetektion kann das erfindungsgemäße Verfahren auch zur Freund/Feind-Erkennung angewendet werden. Da allen befreundeten Fahrzeugen die Vorgabemaßzahl für die zur Freund/Feind-Erkennung ausgesendeten Sendesignale bekannt ist, können ausschließlich die befreundeten Fahrzeuge die Kennsignale, die im Umgebungsrauschen versteckt sind, detektieren. Die feindlichen Fahrzeuge, die diese Information nicht besitzen, sind nicht in der Lage, in dem empfangenen Umgebungsgeräusch diese Sendesignale zu entdecken. Dadurch ist einerseits die Eigenverratswahrscheinlichkeit des mit einer Freund/Feind-Erkennung arbeitenden Fahrzeugverbandes stark verringert und andererseits gewährleistet, dass feindliche Fahrzeuge die Kennsignale nicht nachbilden und sich damit nicht durch eine imitierte Freund/Feind-Kennung tarnen können.

Das erfindungsgemäße Verfahren ist nicht auf Anwendung in der Wassertechnik mittels Sonaranlagen beschränkt. Es kann auch im Medium Luft zum Aussenden und Empfangen von elektromagnetischer Wellenenergie mittels Radaranlagen eingesetzt werden.

Anstelle einer Rückabbildung (Return-Map) kann eine Abbildung des Signals in einen mehrdimensionalen Phasenraum auch durch eine Poincaré-Auftragung oder einer Attraktor-Auftragung oder eine Lorentz-Auftragung oder einer Phasenraumdarstellung vorgenommen werden. Zu den genannten Begriffen wird auf die vorstehend angegebenen Literaturstelle verwiesen.

**Patentansprüche**

1.   Verfahren zum Aussenden und Empfangen von Wellenenergie, bei dem sendeseitig eine Sendeantenne (11) mit einem eine deterministisch-chaotische Struktur aufweisenden, elektrischen Signal gespeist und empfangsseitig in dem von einer Empfangsantenne (12) abgenommenen, elektrischen Empfangssignal das von der Sendeantenne (11) abgestrahlte Signal detektiert wird, **dadurch gekennzeichnet, dass** die deterministisch-chaotische Struktur des elektrischen Signals durch ein Strukturmaß charakterisiert wird, das als Maßzahl der Struktur der Abbildung des zeitlichen Verlaufs des Signals in einem mehrdimensionalen Phasenraum bestimmt wird, und dass die Detektion des Signals in dem Empfangssignal anhand des Strukturmaßes vorgenommen wird.

2.   Verfahren nach Anspruch 1, **dadurch gekennzeichnet, dass** der zeitliche Verlauf des elektrischen Signals aus dem chaotisch-deterministischen Schwingungsverhalten eines Modells abgeleitet wird, dessen Schwingungsverhalten durch Ändern mindestens eines Parameters variierbar ist, dass das mit einem angenommenen Wert des mindestens einen variablen Parameters des Modells generierte elektrische Signal in einen mehrdimensionalen Phasenraum abgebildet wird, dass als Strukturmaß eine Maßzahl der Struktur der Abbildung bestimmt und mit einer Vorgabemaßzahl verglichen wird, dass mit jeweils einem geänderten Wert des mindestens einen variablen Parameters des Modells die Generierung des elektrischen Signals, dessen Abbildung in einen mehrdimensionalen Phasenraum und die Bestimmung der Maßzahl der Struktur der Abbildung solange wiederholt wird, bis eine in einem Toleranzbereich ($\pm$ s) liegende Übereinstimmung der Maßzahl mit der Vorgabemaßzahl erreicht ist, dass die Speisung der Sendeantenne (11) mit demjenigen elektrischen Signal vorgenommen wird, das mit dem zur Übereinstimmung führenden Wert des mindestens einen variablen Parameters des Modells erzeugt worden ist, und dass als Strukturmaß zur empfangsseitigen Detektion die Vorgabemaßzahl herangezogen wird.

3.   Verfahren nach Anspruch 2, **dadurch gekennzeichnet, dass** als Modell die Differentialgleichung eines Rotationspendels mit Unwucht (Pohl-Pendel) verwendet wird, dessen variable Parameter die Federkonstante einer Rückstellfeder, die Amplitude und die Frequenz einer äußeren Anregung, die Dämpfungskonstante einer Schleifreibung, die Masse und der Hebelarm der Unwucht und die Dämpfungskonstante und der Strom einer Wirbelstrombremse sind, und dass der das Schwingungsverhalten variierende mindestens eine Parameter aus diesen variablen Parametern ausgewählt wird.

4.   Verfahren nach Anspruch 2 oder 3, **dadurch gekennzeichnet, dass** empfangsseitig das elektrische Empfangssignal der Empfangsantenne (12) in einen mehrdimensionalen Phasenraum abgebildet wird, eine Maßzahl der Struktur der Abbildung bestimmt und mit der Vorgabemaßzahl verglichen wird und dass bei Übereinstimmung von Maßzahl und Vorgabemaßzahl innerhalb des Toleranzbereichs ($\pm$ s) auf Detektion des Signals erkannt wird.

5.   Verfahren nach einem der Ansprüche 2 bis 4, **dadurch gekennzeichnet, dass** zur Abbildung des elektrischen Signals in den mehrdimensionalen Phasenraum eine charakteristische Größe des elektrischen Signals und für die Abbildung des Empfangssignals in den mehrdimensionalen Phasenraum die gleiche Größe herangezogen wird.

6.   Verfahren nach Anspruch 5, **dadurch gekennzeichnet, dass** als charakteristische Größe

   - die Maxima der Amplitude oder
   - die Minima der Amplitude oder
   - der Abstand der Amplitudenmaxima oder
   - der Abstand der Amplitudenminima oder
   - der Abstand der Durchgangspunkte der Amplitude durch eine willkürlich gewählte Amplitudenschwelle oder
   - in gleichen Zeitintervallen abgenommene Amplitudenabtastwerte oder
   - Schnittpunkte von Poincaré-Schnitten erfasst werden.

7.   Verfahren nach einem der Ansprüche 2 bis 6, **dadurch gekennzeichnet, dass** die Abbildung in einen zweidimensionalen Phasenraum mittels einer Rückabbildung vorgenommen wird, bei der vom elektrischen Signal bzw. Empfangssignal die Werte der charakteristischen Größe in einem festgelegten Signalabschnitt zeitlich aufeinanderfolgend abgenommen und in dem zweidimensionalen Koordinatensystem des Phasenraums der einen und anderen Koordinate zugeordnet werden.

8. Verfahren nach einem der Ansprüche 2 bis 6, **dadurch gekennzeichnet, dass** die Abbildung in den mehrdimensionalen Phasenraum mittels einer Poincare-Auftragung oder einer Attraktor-Auftragung oder einer Lorentz-Auftragung oder einer Phasenraumdarstellung vorgenommen wird.

9. Verfahren nach einem der Ansprüche 2 bis 7, **dadurch gekennzeichnet, dass** als Maßzahl der Struktur der Abbildung eine fraktale Dimension der zweidimensionalen Abbildung berechnet wird.

10. Verfahren nach Anspruch 9, **dadurch gekennzeichnet, dass** die fraktale Dimension nach dem Vergrößerungs-Vermehrungs-Verfahren oder nach dem Gitter-Verfahren oder nach dem Abstandsanalyse-Verfahren berechnet wird.

11. Verfahren nach Anspruch 9 oder 10, **dadurch gekennzeichnet, dass** als Vorgabemaßzahl ein Wert der fraktalen Dimension zwischen Null und zwei gewählt wird.

## Claims

1. Method for emitting and receiving wave energy, in which a transmitting antenna (11) is fed with an electrical signal having a deterministic-chaotic structure at the transmitting end and the signal radiated by the transmitting antenna (11) is detected in the received electrical signal picked up from a receiving antenna (12) at the receiving end, **characterized in that** the deterministic-chaotic structure of the electrical signal is **characterized by** a structural measure which is determined as a dimension of the structure of the map of the temporal course of the signal in a multi-dimensional phase space, and that the signal is detected in the received signal using the structural measure.

2. Method according to Claim 1, **characterized in that** the temporal course of the electrical signal is derived from the chaotic-deterministic oscillation characteristic of a model, the oscillation characteristic of which can be varied by changing at least one parameter **in that** the electrical signal, generated with an assumed value of the at least one variable parameter of the model, is mapped into a multi-dimensional phase space, that as structural measure a dimension of the structure of the map is determined and compared with a default dimension, that the generation of the electrical signal, its mapping into a multi-dimensional phase space and the determination of the dimension of the structure of the map are repeated with in each case an altered value of the at least one variable parameter of the model, until a match, located within a tolerance range ($\pm$ s), of the dimension with the default dimension has been reached, that the transmitting antenna (11) is fed with the electrical signal which has been generated with the value of the at least one variable parameter of the model leading to the match, and that the default dimension is utilized as structural measure for the detection at the receiving end.

3. Method according to Claim 2, **characterized in that,** as a model, the differential equation of a pendulum of revolution with unbalance (Pohl pendulum) is used, the variable parameters of which are the spring constant of a restoring spring, the amplitude and the frequency of an external excitation, the damping constant of an abrasive friction, the mass and the lever arm of the unbalance and the damping constant and the current of an eddy-current brake, and that the at least one parameter which varies the oscillation characteristic is selected from these variable parameters.

4. Method according to Claim 2 or 3, **characterized in that** the received electrical signal of the receiving antenna (12) is mapped into a multi-dimensional phase space at the receiving end, a dimension of the structure of the map is determined and compared with the default dimension, and that, when dimension and default dimension match within the tolerance range ($\pm$ s), detection of the signal is recognized.

5. Method according to one of Claims 2 to 4,
   **characterized in that** a characteristic quantity of electrical signal is used for mapping the electrical signal into the multi-dimensional phase space and the same quantity is used for mapping the received signal into the multi-dimensional phase space.

6. Method according to Claim 5, **characterized in that** as characteristic quantity,

   - the peaks of the amplitude or

- the troughs of the amplitude or
- the space between the amplitude peaks or
- the space between the amplitude troughs or
- the space between the transition points of the amplitude through an arbitrarily selected amplitude threshold or
- amplitude samples taken in identical time intervals or
- intersections of Poincaré sections are detected.

7. Method according to one of Claims 2 to 6,
**characterized in that** the mapping into a two-dimensional phase space is performed by means of a return map in which the values of the characteristic quantity in a predetermined signal segment are picked up successively in time from the electrical signal or received signal and are allocated to one and the other coordinate in the two-dimensional coordinate system of the phase space.

8. Method according to one of Claims 2 to 6,
**characterized in that** the mapping into the multi-dimensional phase space is performed by means of a Poincaré plot or an attractor plot or a Lorentz plot or a phase-space representation.

9. Method according to one of Claims 2 to 7,
**characterized in that** a fractal dimension of the two-dimensional map is calculated as dimension of the structure of the map.

10. Method according to Claim 9, **characterized in that** the fractal dimension is calculated in accordance with the magnification - multiplication method or in accordance with the grating method or in accordance with the distance analysis method.

11. Method according to Claim 9 or 10, **characterized in that** a value of the fractal dimension between 0 and 2 is selected as default dimension.


**Revendications**

1. Procédé pour envoyer et recevoir de l'énergie ondulatoire, avec lequel, du côté de l'émission, une antenne d'émission (11) est alimentée par un signal électrique qui présente une structure chaotique déterministe et, du côté de la réception, le signal émis par l'antenne d'émission (11) est détecté dans le signal de réception électrique réceptionné par une antenne de réception (12), **caractérisé en ce que** la structure chaotique déterministe du signal électrique est **caractérisée par** une dimension de structure qui est définie en tant qu'indice dimensionnel de la structure de la représentation du tracé dans le temps du signal dans un espace de phase multidimensionnel et que la détection du signal dans le signal de réception est effectuée au moyen de la dimension de structure.

2. Procédé selon la revendication 1, **caractérisé en ce que** le tracé dans le temps du signal électrique est dérivé du comportement oscillant chaotique déterministe d'un modèle dont il est possible de faire varier le comportement oscillant en modifiant au moins un paramètre, que le signal électrique généré avec une valeur supposée de l'au moins un paramètre variable du modèle est représenté dans un espace de phase multidimensionnel, que la dimension de structure définie est un indice dimensionnel de la structure de la représentation qui est comparé avec un indice dimensionnel de consigne, que la génération du signal électrique, sa représentation dans un espace de phase multidimensionnel et la détermination de l'indice dimensionnel de la structure de la représentation sont répétés à chaque fois avec une valeur modifiée de l'au moins un paramètre variable du modèle jusqu'à obtenir une concordance de l'indice dimensionnel avec l'indice dimensionnel de consigne dans une plage de tolérance donnée ($\pm$s), que l'alimentation de l'antenne d'émission (11) est effectuée avec le signal électrique qui a été généré avec la valeur de l'au moins un paramètre variable du modèle qui a donné lieu à la concordance et que l'indice dimensionnel utilisé pour la détection côté réception est l'indice dimensionnel de consigne.

3. Procédé selon la revendication 2, **caractérisé en ce que** le modèle utilisé est l'équation différentielle d'un pendule à rotation avec balourd (pendule de Pohl) dont les paramètres variables sont la constante de rappel d'un ressort de rappel, l'amplitude et la fréquence d'une excitation externe, la constante d'amortissement d'un frottement d'abrasion, la masse et le bras de levier du balourd et la constante d'amortissement ainsi que le courant d'un frein à courant de Foucault, et que l'au moins un paramètre qui fait varier le comportement oscillant est choisi parmi ces paramètres variables.

**4.** Procédé selon la revendication 2 ou 3,
**caractérisé en ce que** du côté de la réception, le signal de réception électrique de l'antenne de réception (12) est représenté dans un espace de phase multidimensionnel, un indice dimensionnel de la structure de la représentation est déterminé et comparé avec l'indice dimensionnel de consigne et que la détection du signal est reconnue en cas de concordance entre l'indice dimensionnel et l'indice dimensionnel de consigne dans la plage de tolérance donnée ($\pm$s).

**5.** Procédé selon l'une des revendications 2 à 4, **caractérisé en ce qu'**une grandeur caractéristique du signal électrique est utilisée pour représenter le signal électrique dans l'espace de phase multidimensionnel et la même grandeur est utilisée pour représenter le signal de réception dans l'espace de phase multidimensionnel.

**6.** Procédé selon la revendication 5, **caractérisé en ce que** la grandeur caractéristique acquise est

- les maximums de l'amplitude ou
- les minimums de l'amplitude ou
- l'écart entre les maximums d'amplitude ou
- l'écart entre les minimums d'amplitude ou
- l'écart entre les points de passage de l'amplitude par un seuil d'amplitude choisi arbitrairement ou
- des valeurs échantillonnées de l'amplitude relevées à intervalles identiques ou
- les points d'intersection des coupes de Poincaré.

**7.** Procédé selon l'une des revendications 2 à 6, **caractérisé en ce que** la représentation est effectuée dans un espace de phase bidimensionnel au moyen d'une application de Poincaré (return map) avec laquelle les valeurs de la grandeur caractéristique sont prélevées chronologiquement dans une portion donnée du signal et associées à l'une et l'autre coordonnée dans le système de coordonnées bidimensionnel de l'espace de phase.

**8.** Procédé selon l'une des revendications 2 à 6, **caractérisé en ce que** la représentation dans l'espace de phase multidimensionnel est effectuée au moyen d'un tracé de Poincaré ou d'un tracé d'attracteur ou encore d'un tracé de Lorentz ou d'une présentation en espace de phase.

**9.** Procédé selon l'une des revendications 2 à 7, **caractérisé en ce que** l'indice dimensionnel calculé de la structure de la représentation est une dimension fractale de la représentation bidimensionnelle.

**10.** Procédé selon la revendication 9, **caractérisé en ce que** la dimension fractale est calculée d'après le procédé de multiplication par accroissement ou d'après le procédé par grille ou encore d'après le procédé d'analyse de l'écart.

**11.** Procédé selon la revendication 9 ou 10,
**caractérisé en ce que** l'indice dimensionnel de consigne choisi est une valeur de la dimension fractale entre zéro et deux.

Fig.1

Fig.2

Fig.3

Fig.4

Fig.5

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3733552 A
- EP 0631153 B1
- US 4060792 A
- DE 2114373 A1
- DE 10027538 A1